# EUROPEAN PATENT SPECIFICATION

(11) **EP 1 584 724 B1**
(45) Date of publication and mention of the grant of the patent: **23.11.2016**
(21) Application number: 05006714.9
(22) Date of filing: 29.03.2005
(51) Int. Cl.: D04H 13/00, B32B 5/02, C03C 25/10, C03C 25/24

(54) **Nonwoven fiber mats with smooth surfaces and method**
Faserflies mit glatter Oberfläche und Verfahren zu seiner Herstellung
Matelas non-tissé avec une surface lisse et prodédé de fabrication

(30) Priority: 30.03.2004 US 812457
(43) Date of publication of application: 12.10.2005
(73) Proprietor: Johns Manville International, Inc., Denver, CO 80202 (US)
(72) Inventor: Hitch, James Matthew, Niota Tennessee 37826 (US)
(74) Representative: Mai, Dörr, Besier

(56) References cited:
- EP-A- 1 462 559
- WO-A-97/35056
- WO-A-98/04404
- US-A- 5 308 692
- US-A1- 2004 176 003

## Description

The present invention involves nonwoven mats having a smooth surface and good properties for use in making coated mats for facing products like foam board, gypsum board, various types of wood boards, etc., and the method of making these mats. These mats are also useful as reinforcement and dimensional stabilizers for making a large number of products such as insulation composites or laminates of all types and for many uses. The mats are also useful as stabilizing and reinforcing substrates for other products such as fiberglass duct board and the like.

### BACKGROUND

It is known to make reinforcing nonwoven mats from fibers like glass and/or synthetic polymer fibers and to use these mats as substrates in the manufacture of a large number of products, e.g. US 2003/054714; WO 97/35056; US 5,308,692; WO 98/04404. Methods of making nonwoven mats are known, such as conventional wet laid processes described in U. S. Patent Nos. 4,112,174, 4,681,802 and 4,810,576, the disclosures of which are hereby incorporated herein by reference.

Urea formaldehyde resins, usually modified with one or more of acrylic, styrene butadiene, or vinyl acetate resins, are conventionally used as a binder for the fibers in the mats because of their suitability for the applications and their relatively low cost. The binder content of these finished mats typically are in the range of 15 to 25 weight percent or higher, based on the dry weight of the mat. It is also known to use other types of aqueous latex binders like acrylics, polyester, polyvinyl acetate, polyvinyl alcohol and other types of resinous binders alone or in combination.

Nonwoven fibrous mats containing glass fibers having average fiber diameters of about 10 to about 16 microns have been used as facers for glass fiber insulation blanket, pressed glass fiber insulation boards, duct liner, foam board, gypsum board and various wood board products. It is also known to increase the hiding power and reduce bleed through of foam by adding a minor portion of very small diameter glass microfibers, having average diameters of about 2 microns or less, but this adds considerable cost to the mat, makes the mat weaker and fuzzier and increases the amount of scrap when making this mat due to wrinkling problems.

It is also disclosed in United States Patent No. 5,001,005 and 5,965,257 to make glass fiber mats containing 60-90 weight percent glass fibers 10-40 percent of non-glass filler material and 1-30 percent of a non-asphaltic binder to use as a facer for a foam substrate. The filler materials are bonded to the glass fibers with the binder and prevent bleed through of the foam precursor materials when the latter is placed in contact with the mat prior to blowing.

The mats described above have a small amount of "stand up" fibers that are undesirable, at least use as facers for certain products like gypsum board and foam board, etc., particularly on boards having a faced side that will later be painted as an interior of a building. The "stand up" fibers cause some irritation when the faced boards are handled without gloves or arm covering and these fibers also interfere with the painting process and detract from the appearance of the painted surface.

It is known, as illustrated by United States Patent No. 5,965,257, to make a mat having zero bleed through when used as a facer mat in the manufacture of foam insulation by heavily coating a dry, bonded mat on a separate coating line. This patent teaches a coating composition comprising one or more fillers and a binder like acrylic latex. It is also known to use off-line coating to make mats having good hiding and painting properties since the heavy coating surrounds and holds down the "stand up" fibers, but the thick coating required adds considerable cost to the product. If there were fewer "stand up" fibers and if the ends of these fibers were closer to the surface of the mat, substantially less coating material would be required.

### SUMMARY OF THE INVENTION

Nonwoven mats of the present invention are defined in claim 1.

The glass fiber having an average fiber diameter in the range of about 9 to about 14 microns, preferably about 9 to about 11 microns. Other fibers including synthetic fibers like nylon, polyester, polyethylene, etc. can be present in amounts up to 100 percent of the fibers. The length of the glass fibers is from about 0.3 cm 0.12 inch) to about 2.03 cm 0.8 inch), preferably from about 0.51 cm (0.2 inch) to about 1.53 cm 0.6 inch). The fiber is in combinations of lengths, and it is preferred to use combinations of short fiber like 0.3 or 0.5 cm (0.12 or 0.2 inch) fiber with longer fibers to optimize smoothness and cost, since the shorter the fiber, the higher its cost, while at the same time minimizing the amount of "stand up" fibers. By using shorter fibers, a mat having smaller pores at the surface is produced than mats made from 1.78cm (0.7 inch) to about 3.05 cm (1.2 inch) long fibers since there are more fibers per unit weight of fibers. A major portion of the fiber is at least about 1.14 cm (0.45 inch) long and a minor portion of the fiber is shorter than about 1.02 cm 0.4 inch).

The present invention also includes laminates comprising a layer of nonwoven fiber mat according to the invention bonded onto another layer comprising another mat, gypsum board, foam board, a board of a wood product including particle board, oriented strand board, chip board, plywood, high pressure laminates, a layer of thermoplastic or thermoset polymer, or a layer of fibrous insulation product.

The present invention also includes a method of making the novel nonwoven fiber mats described above from a slurry of glass fiber, comprising forming a nonwoven web on a moving, permeable surface and thereafter saturating the fibrous web with an aqueous resin based binder as defined in claim 5, removing excess aqueous binder to produce an Loss On Ignition of the finished mat of 10-25 weight percent and drying and curing the mat in an oven. The resultant mat is normally wound into rolls and packaged for shipment, and/or transported to a point of use.

When the word "about" is used herein it is meant that the amount or condition it modifies can vary some beyond that so long as the advantages of the invention are realized. Practically, there is rarely the time or resources available to very precisely determine the limits of all the parameters of ones invention because to do would require an effort far greater than can be justified at the time the invention is being developed to a commercial reality. The skilled artisan understands this and expects that the disclosed results of the invention might extend, at least somewhat, beyond one or more of the limits disclosed. Later, having the benefit of the inventors disclosure and understanding the inventive concept and embodiments disclosed including the best mode known to the inventor, the inventor and others can, without inventive effort, explore beyond the limits disclosed to determine if the invention is realized beyond those limits and, when embodiments are found to be without any unexpected characteristics, those embodiments are within the meaning of the term about as used herein. It is not difficult for the artisan or others to determine whether such an embodiment is either as expected or, because of either a break in the continuity of results or one or more features that are significantly better than reported by the inventor, is surprising and thus an unobvious teaching leading to a further advance in the art.

### DETAILED DESCRIPTION OF THE INVENTION

A slurry of fibers is made by adding the glass fibers having an average fiber diameter from about 9 to about 14 microns and lengths, a blend of two lengths, of from about 0.3 cm (0.12) to about 2.03 cm (0.8 inch), preferably 0.51 cm to 1.53 cm (0.2 to 0.6 inch), long, to a conventional wet process white water in a pulper to disperse the fibers forming a slurry having a typical fiber concentration of about 0.2-1.0 weight percent. The slurry is then metered into a flow of the white water to dilute the fiber concentration to about 0.1 wt. percent or less after which this dilute slurry is then deposited onto a moving screen forming wire to dewater and form a wet nonwoven fibrous mat.

This wet nonwoven web of fiber is then transferred to a second moving screen in-line with the forming screen and run through a binder application saturating station where an aqueous binder mixture, such as an aqueous acrylic resin, is applied to the mat in any one of several known ways. The binder saturated mat is then run over a suction section while still on the moving screen to remove excess binder. Preferably, the aqueous binder solution is applied using a curtain coater or a dip and squeeze applicator, but other methods of application such as spraying are also known.

The wet mat is then transferred to a wire mesh moving belt and run through an oven to dry the wet mat and to cure the resin binder, in this case an acrylic, which bonds the fibers together in the mat. In the drying and curing oven the mat is subjected to temperatures up to 176.67 - 260°C (350 - 500 degrees F) or higher for periods usually not exceeding 1-2 minutes and as little as a few seconds.

The binders used to bond the fibers together are preferably resins that can be put into aqueous mixtures or emulsion latex. Resin based binders meeting this description are acrylics, with or without cross-linking agents, polyvinyl alcohol, carboxyl methyl cellulose, hydroxyl ethyl cellulose, lignosulfonates, urea formaldehyde resins modified in known manner to plasticize the binder and to provide higher wet strengths, cellulose gums and other similar resins. Of these, conventional modified urea formaldehyde resins are much preferred from a cost standpoint, and bonding strength to fibers, particularly glass fibers. Unfortunately, acceptance is not always as good as the functional suitability of this binder for various applications. A preferred acrylic resin commercially available is Noveon™ 26138 acrylic emulsion available from Noveon Corp. of Cleveland, OH.

The mats of the present invention are particularly suited for coating with various conventional coating compositions and the resultant coated mats make good facers for various board products as described earlier. The nonwoven fiber glass mats of the invention have much larger pores between the fibers than various papers as evidenced by very high air permeability in the mats compared to paper and as evidenced by the manner in which an aqueous binder is applied to the newly formed wet web of glass fiber, i.e. by flowing a substantial excess of binder through the mat in a very short time, within a few feet while the mat is moving at several hundred feet per minute, and then removing excess binder from the mat by running the mat over a suction slot. If the permeability of the wet web is not substantially higher than that of paper, the binder will tend to puddle on the surface and not flow the mat. It is for this reason that glass fiber mat is not "coated" wet in the manner used for papers.

Processes for making nonwoven fiberglass mats are well known and some of them are described in U. S. Patent Nos. 4,112,174, 4,681,802 and 4,810,576, which references are hereby incorporated into this disclosure by reference, but any known method of making nonwoven mats can be used. The preferred technique for the making of mats of the present invention is forming a dilute aqueous slurry of fibers and depositing the slurry onto an inclined moving screen forming wire to dewater the slurry and form a wet nonwoven fibrous mat, on machines like a Hydroformer™ manufactured by Voith - Sulzer of Appleton, WS, or a Deltaformer™ manufactured by Valmet/Sandy Hill of Glenns Falls, NY. The examples disclosed herein were made on a pilot scale model of a wet forming machine, binder applicator, and oven that produces a mat very similar to a mat that would be produced from the same slurry and binder on a production sized Voith - Sulzer Deltaformer™ with a curtain coater binder applicator and a flat bed, permeable conveyor type convection dryer.

### EXAMPLE 1

A fiber slurry was prepared in a well known manner by adding one half inch long wet H137 E type glass chopped fiber available from Johns Manville of Denver, CO. The fiber had diameters averaging about 10-11 microns to a known cationic white water containing Natrosol™ thickening agent available from Hercules, Inc. and a cationic surfactant C-61, an ethoxylated tallow amine available from Cytec Industries, Inc. of Morristown, NJ, as a dispersing agent to form a slurry having a conventional fiber concentration. After allowing the slurry to agitate for about 20 minutes to thoroughly disperse the fibers, the slurry was metered into a moving stream of the same whitewater to dilute the fiber concentration to conventional concentration weight percent before pumping the diluted slurry to a headbox of a pilot sized machine similar to a Voith Hydroformer™ where a wet nonwoven mat was continuously formed.

The wet mat was removed from the forming wire and transferred to a Sandy Hill type curtain coater where a conventional aqueous Noveon™ 26138 acrylic resin aqueous emulsion was applied in an amount to provide a binder level in the cured mat of about 20 weight percent. The wet mat was then transferred to an oven belt and carried through an oven to dry the mat and to fully cure the binder resin to a temperature of about 148.89 - 232.22°C (300-450 degrees F). This mat is a conventional and control mat. The basis weight of the mat produced was 548.85g/9.29m² (1.21 lbs./100 sq. ft). This mat is suitable for coating applications.

### Example 2

Another mat was made in the same manner as used in Example 1 except that a blend of different fiber lengths was used for the fiber. The fiber blend contained about 75 wt. percent one-half inch long H137 fibers and about 25 wt. percent H137 fibers that were about 0.51 cm 0.2 inch) long. The type and amount of binder were the same as in the mat of Example 1. The finished mat of this Example 2 had a basis weight of about 544.31g/9.29m² (1.2 lbs./100 sq. ft). This mat also appeared to have a smoother surface than the mat of Example 1. This mat was for applying a coating and the thickness of the coating could possibly be reduced versus the coating on the mat made in Example 1.

### Example 3

Another mat was made in the same manner as used in Example 2 except the fiber blend contained about 50 wt. percent H137 fibers having a length of about 1.27 cm 0.5 inch) long and about 50 wt. percent H137 fibers that were about 0.51 cm 0.2 inch) long. The type and amount of binder was the same as Examples 1 and 2. The finished mat had a basis weight of about 544.31g/9.29m² (1.2 lbs./100 sq. ft.) and had substantially fewer "stand up" fibers and a smoother surface than the mat of Example 2. This mat was for applying a coating and the thickness of the coating could be minimized because of the improved nature and reduced amount of the "stand up" fibers.

## Claims

1. A nonwoven fibrous mat comprising a blend of glass fibers of at least two different lengths, with one half or a major portion of the fibers being at least 1.14 cm (0.45 inch) long and a remainder half or minor portion of the fibers being less than 1.02 cm (0.4 inch) long, said glass fibers having an average diameter in the range of 9 and 14 microns, said glass fibers having an length from 0.3 cm (0.12 inches) to 2.03 cm (0.8 inches), wherein said fibers are bound together with a cured aqueous binder system, the binder content of the mat being in the range of 10-25 weight percent of the finished mat, said aqueous binder system is selected from a group consisting of an acrylic, a polyvinyl alcohol, a hydroxyl ethyl cellulose, a carboxyl methyl cellulose, a cellulose gums, a polyvinyl pyrilidone, polyvinyl acetate, urea formaldehyde, melamine formaldehyde, with or without a crosslinking agent, with or without one or more plasticizers, and mixtures thereof.

2. The nonwoven fibrous mat of claim 1, said blend of glass fibers having 75 wt. percent of the fibers being at least 1.14 cm (0.45 inch) long and 25 wt. percent of the fibers being 0.51 cm (0.2 inch) long.

3. A laminate comprising a layer of nonwoven fiber mat comprising a blend of glass fibers of at least two different lengths, with one half or a major portion of the fibers being at least 1.14cm (0.45 inch) long and a remainder half or minor portion of the fibers being less than 1.02 cm (0.4 inch) long, said glass fibers having an average diameter in the range of 9 and 14 microns, said glass fibers having an length from 0.3 cm (0.12 inches) to 2.03 cm (0.8 inches), wherein said fibers are bound together with a cured aqueous binder system, the binder content of the mat being in the range of 10-25 weight percent of the finished mat, said aqueous binder system is selected from a group consisting of an acrylic, a polyvinyl alcohol, a hydroxyl ethyl cellulose, a carboxyl methyl cellulose, a cellulose gums, a polyvinyl pyrilidone, polyvinyl acetate, urea formaldehyde, melamine formaldehyde, with or without a crosslinking agent, with or without one or more plasticizers, and mixtures thereof, and a surface of said mat being bonded to at least one layer of different material.

4. The laminate of claim 3, said blend of glass fibers having 75 wt. percent of the fibers being at least 1.14 cm (0.45 inch) long and 25 wt. percent of the fibers being 0.51 cm (0.2 inch) long.

5. A method of making a nonwoven fibrous mat comprising a blend of glass fibers of at least two different lengths, with one half or a major portion of the fibers being at least 1.14 cm (0.45 inch) long and a remainder half or minor portion of the fibers being less than 1.02 cm (0.4 inch) long, said glass fibers having an average diameter in the range of 9 and 14 microns, said glass fibers having an length from 0.3 cm (0.12 inches) to 2.03 cm (0.8 inches), said method comprising making an aqueous slurry of the fibers, forming a wet web of the fibers from the slurry, applying an aqueous binder system selected from a group consisting of an acrylic, a polyvinyl alcohol, a hydroxyl ethyl cellulose, a carboxyl methyl cellulose, a cellulose gums, a polyvinyl pyrilidone, polyvinyl acetate, urea formaldehyde, melamine formaldehyde, with or without a crosslinking agent, with or without one or more plasticizers, and mixtures thereof, to the wet web and removing excess binder to produce an Loss On Ignition in the finished mat of 10-25 weight percent, and drying the mat and curing the binder.

6. The method of claim 5, said blend of glass fibers having 75 wt. percent of the fibers being at least 1.14 cm (0.45 inch) long and 25 wt. percent of the fibers being 0.51 cm (0.2 inch) long.

## Patentansprüche

1. Faserige Vliesstoffmatte umfassend eine Mischung von Glasfasern von mindestens zwei verschiedenen Längen, wobei eine Hälfte oder ein Hauptanteil der Fasern mindestens 1,14 cm (0,45 Zoll) lang ist und eine restliche Hälfte oder ein geringerer Anteil der Fasern weniger als 1,02 cm (0,4 Zoll) lang ist, wobei die Glasfasern einen durchschnittlichen Durchmesser im Bereich von 9 und 14 Mikron aufweisen, wobei die Glasfasern eine Länge von 0,3 cm (0,12 Zoll) bis 2,03 cm (0,8 Zoll) aufweisen, wobei die Fasern mit einem ausgehärteten wässrigen Bindemittelsystem zusammengebunden sind, wobei der Bindemittelgehalt der Matte im Bereich von 10 - 25 Gewichtsprozent der fertigen Matte liegt, wobei das wässrige Bindemittelsystem aus einer Gruppe ausgewählt ist bestehend aus einem Acryl, einem Polyvinylalkohol, einer Hydroxylethylcellulose, einer Carboxylmethylcellulose, einem Cellulosegummi, einem Polyvinylpyrilidon, Polyvinylacetat, Harnstoffformaldehyd, Melaminformaldehyd mit oder ohne einem Vernetzungsmittel, mit oder ohne einem oder mehreren Weichmachern und Mischungen davon.

2. Faserige Vliesstoffmatte nach Anspruch 1, wobei bei der Mischung von Glasfasern 75 Gewichtsprozent der Fasern mindestens 1,14 cm (0,45 Zoll) lang sind und 25 Gewichtsprozent der Fasern 0,51 cm (0,2 Zoll) lang sind.

3. Laminat umfassend eine Schicht von faseriger Vliesstoffmatte umfassend eine Mischung von Glasfasern von mindestens zwei verschiedenen Längen, wobei eine Hälfte oder ein Hauptanteil der Fasern mindestens 1,14 cm (0,45 Zoll) lang ist und eine restliche Hälfte oder ein geringerer Anteil der Fasern weniger als 1,02 cm (0,4 Zoll) lang ist, wobei die Glasfasern einen durchschnittlichen Durchmesser im Bereich von 9 und 14 Mikron aufweisen, wobei die Glasfasern eine Länge von 0,3 cm (0,12 Zoll) bis 2,03 cm (0,8 Zoll) aufweisen, wobei die Fasern mit einem ausgehärteten wässrigen Bindemittelsystem zusammengebunden sind, wobei der Bindemittelgehalt der Matte im Bereich von 10 - 25 Gewichtsprozent der fertigen Matte liegt, wobei das wässrige Bindemittelsystem aus einer Gruppe ausgewählt ist bestehend aus einem Acryl, einem Polyvinylalkohol, einer Hydroxylethylcellulose, einer Carboxylmethylcellulose, einem Cellulosegummi, einem Polyvinylpyrilidon, Polyvinylacetat, Harnstoffformaldehyd, Melaminformaldehyd mit oder ohne einem Vernetzungsmittel, mit oder ohne einem oder mehreren Weichmachern und Mischungen davon, und wobei eine Oberfläche der Matte an mindestens eine Schicht aus anderem Material bondiert ist.

4. Laminat nach Anspruch 3, wobei bei der Mischung von Glasfasern 75 Gewichtsprozent der Fasern mindestens 1,14 cm (0,45 Zoll) lang und 25 Gewichtsprozent der Fasern 0,51 cm (0,2 Zoll) lang sind.

5. Verfahren zum Herstellen einer faserigen Vliesstoffmatte umfassend eine Mischung von Glasfasern von mindestens zwei verschiedenen Längen, wobei eine Hälfte oder ein Hauptanteil der Fasern mindestens 1,14 cm (0,45 Zoll) lang ist und eine restliche Hälfte oder ein geringerer Anteil der Fasern weniger als 1,02 cm (0,4 Zoll) lang ist, wobei die Glasfasern einen durchschnittlichen Durchmesser im Bereich von 9 und 14 Mikron aufweisen, wobei die Glasfasern eine Länge von 0,3 cm (0,12 Zoll) bis 2,03 cm (0,8 Zoll) aufweisen, wobei das Verfahren das Herstellen einer wässrigen Aufschlämmung der Fasern, das Bilden einer nassen Bahn der Fasern aus der Aufschlämmung, das Aufbringen eines wässrigen Bindemittelsystems ausgewählt aus einer Gruppe bestehend aus einem Acryl, einem Polyvinylalkohol, einer Hydroxylethylcellulose, einer Carboxylmethylcellulose, einem Cellulosegummi, einem Polyvinylpyrilidon, Polyvinylacetat, Harnstoffformaldehyd, Melaminformaldehyd mit oder ohne einem Vernetzungsmittel, mit oder ohne einem oder mehreren Weichmachern und Mischungen davon auf die nasse Bahn und das Entfernen von überschüssigem Bindemittel, um einen Glühverlust in der fertigen Matte von 10 - 25 Gewichtsprozent zu erzeugen, und das Trocknen der Matte und das Aushärten des Bindemittels umfasst.

6. Verfahren nach Anspruch 5, wobei bei der Mischung von Glasfasern 75 Gewichtsprozent der Fasern mindestens 1,14 cm (0,45 Zoll) lang und 25 Gewichtsprozent der Fasern 0,51 cm (0,2 Zoll) lang sind.

## Revendications

1. Matelas non tissé comprenant un mélange de fibres de verre d'au moins deux longueurs différentes, avec une moitié ou une portion importante de fibres étant d'au moins 1,14 cm (0,45 pouces) longueur et une moitie restante ou petite portion de fibres étant moins de 1,02 cm (0,4 pouces) longueur, lesdites fibres de verre ayant un diamètre moyen dans l'intervalle de 9 et 14 microns, lesdites fibres de verre ayant une longueur de 0,3 cm (0,12 pouce) à 2,03 cm (0,8 pouces), où lesdites fibres sont liées ensemble avec un système de liant aqueux durci, la teneur de liant du matelas étant dans l'intervalle 10-25 pourcents en poids du matelas fini, ledit système de liant aqueux est choisi d'un groupe formé d'un acrylique, alcool polyvinylique, hydroxyle éthyle cellulose, carboxyle méthyle cellulose, gomme de cellulose, polyvinyle pyrilidone, acétate de polyvinyle, urée formaldéhyde, mélamine formaldéhyde, avec ou sans un agent de réticulation, avec ou sans un plusieurs plastifiants, et mélanges de ceux-ci.

2. Matelas non tissé selon la revendication 1, ledit mélange de fibres de verre ayant 75 pourcents en poids de fibres étant d'au moins 1,14 cm (0,45 pouces) longueur et 25 pourcents en poids de fibres étant de 0,51 cm (0,2 pouces) longueur.

3. Stratifié comprenant une couche de matelas non tissé comprenant un mélange de fibres de verre d'au moins deux longueurs différentes, avec une moitié ou une portion importante de fibres étant d'au moins 1,14 cm (0,45 pouces) longueur et une moitie restante ou une petite portion de fibres étant moins de 1,02 cm (0,4 pouces) longueur, lesdites fibres de verre ayant un diamètre moyen dans l'intervalle de 9 et 14 microns, lesdites fibres de verre ayant une longueur de 0,3 cm (0,12 pouce) à 2,03 cm (0,8 pouces), où lesdites fibres sont liées ensemble avec un système de liant aqueux durci, la teneur de liant du matelas étant dans l'intervalle 10-25 pourcents en poids du matelas fini, ledit système de liant aqueux est choisi du groupe formé d'un acrylique, alcool polyvinylique, hydroxyle éthyle cellulose, carboxyle méthyle cellulose, gomme de cellulose, polyvinyle pyrilidone, acétate de polyvinyle, urée formaldéhyde, mélamine formaldéhyde, avec ou sans un agent de réticulation, avec ou sans un ou plusieurs plastifiants, et mélanges de ceux-ci, et une surface dudit matelas étant liée à au moins une couche de matériau différent.

4. Stratifié selon la revendication 3, ledit mélange de fibres de verre ayant 75 pourcents en poids de fibres étant d'au moins 1,14 cm (0,45 pouces) longueur et 25 pourcents en poids de fibres étant de 0,51 cm (0,2 pouces) longueur.

5. Procédé de fabrication de matelas non tissé comprenant un mélange de fibres de verre d'au moins deux longueurs différentes, avec une moitié ou une portion importante des fibres étant d'au moins de 1,14 cm (0,45 pouces) longueur et une moitie restante ou petite portion des fibres étant moins de 1,02 cm (0,4 pouces) longueur, lesdites fibres de verre ayant un diamètre moyen dans l'intervalle de 9 et 14 microns, lesdites fibres de verre ayant une longueur de 0,3 cm (0,12 pouces) à 2,03 cm (0,8 pouces), ledit procédé comprenant faire une suspension aqueuse de fibres, formant un réseau humide de fibres dans la suspension, appliquer un système de liant aqueux choisi du groupe formé d'un acrylique, alcool polyvinylique, hydroxyle éthyle cellulose, carboxyle méthyle cellulose, gomme de cellulose, polyvinyle pyrilidone, acétate de polyvinyle, urée formaldéhyde, mélamine formaldéhyde, avec ou sans un agent de réticulation, avec ou sans un ou plusieurs plastifiants, et mélanges de ceux-ci, au réseau humide et éloigner le liant en excès pour produire une perte au recuit dans le matelas fini de 10-25 pourcents en poids, et sécher le matelas et durcir le liant.

6. Procédé selon la revendication 5, ledit mélange de fibres de verre ayant 75 pourcents en poids de fibres étant d'au moins 1,14 cm (0,45 pouces) longueur et 25 pourcents en poids de fibres étant de 0,51 cm (0,2 pouces) longueur.
